# EUROPEAN PATENT APPLICATION

(11) **EP 1 691 330 A1**
(43) Date of publication of application: **16.08.2006**
(21) Application number: 05425072.5
(22) Date of filing: 15.02.2005
(51) Int. Cl.: G06Q 10/00

(54) **Production plant**

(71) Applicant: CNH Italia S.p.A., 41100 Modena (IT)
(72) Inventor: Agazzani, Tiziano, 41010 Modena (IT)
(74) Representative: Cerbaro, Elena

(57) **Abstract**

A production plant (1) having a number of machine tools (2), a number of tools/instruments (3), and a computer system (4) having a number of first memory cells (9) containing work cycle descriptions, a number of second memory cells (10) containing operation descriptions, a number of third memory cells (11) containing step descriptions, a number of fourth memory cells (12) containing first ties between each first memory cell (9) and a number of second memory cells (10), and a number of fifth memory cells (13) containing second ties between each second memory cell (10) and a number of third memory cells (11).

## Description

The present invention relates to a production plant.

The present invention may be used to advantage in a machine shop (or workshop), to which the following description refers purely by way of example.

A workshop comprises a number of machine tools, each for performing a given range of machining operations, and a number of tools/instruments, and may carry out a large number of machining processes, each for producing a given mechanical part.

To ensure all the machining processes are carried out properly (in terms of both the end result and operator safety), international quality standards (in particular ISO 9000) require that each machining process be adequately documented, and that each document be drawn up in five stamped, numbered, certified copies.

When producing a part using one or more machine tools, the first document to be drawn up is the work cycle, which lists all the operations by which a workpiece becomes a finished part. Each operation in the work cycle has a progressive identification number; a description of the machine tool to be used (possibly the machine tool location within the workshop); and a description of the work to be carried out on the workpiece, and which is normally defined by an orderly succession of elementary jobs/operations known as steps.

Current international standards require that, for each step in the operation, a respective card be drawn up documenting the tool to use, the machining plan, and any other necessary information, i.e. a card providing the operator with detailed information of how to carry out the relative work on the mechanical part.

In a medium- or large-size workshop, the amount of documentation involved in accurately describing each step in each possible work cycle is therefore impressive. Moreover, whenever changes are made to a tool or to the way in which the work is performed, all the relative cards must also be altered. Creating and, above all, continually updating all the documentation involved is therefore an extremely time-consuming, high-cost process.

Computer systems to automate creation and management of such documentation have been proposed, and which provide for creating and updating electronic documents printable on demand. Such documents, however, are none other than an electronic version of the corresponding paper documents, and are managed in exactly the same way. Consequently, though updating is more efficient than using conventional paper documents, the time factor involved is still considerable.

It is an object of the present invention to provide a production plant, which is cheap and easy to implement, and which, at the same time, is designed to eliminate the aforementioned drawbacks.

According to the present invention, there is provided a production plant as claimed in the accompanying Claims.

A non-limiting embodiment of the present invention will be described by way of example with reference to the accompanying drawings, in which:
Figure 1 shows a schematic view of a production plant in accordance with the present invention;
Figure 2 shows a diagram of the memory structure of a computer system of the Figure 1 plant.

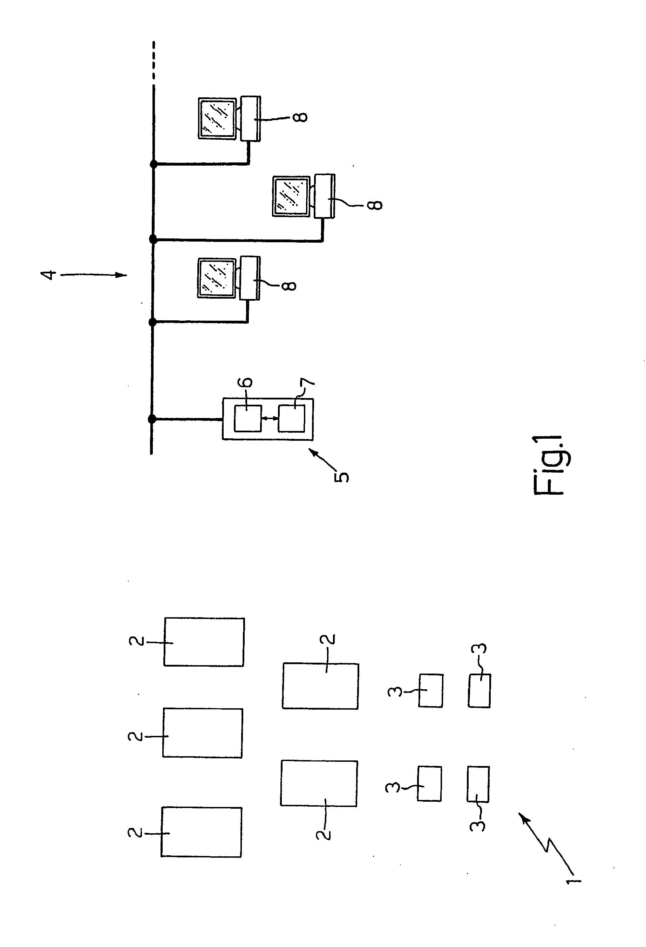

Number 1 in Figure 1 indicates a workshop comprising a number of machine tools 2, each for performing a given range of machining operations, and a number of tools/instruments 3.

To ensure all the machining processes are carried out properly (in terms of both the end result and operator safety), each machining process must be adequately documented. For which purpose, workshop 1 also comprises a computer system 4 for storing work cycle description documentation.

When producing a part using one or more machine tools 2, the first document to be drawn up is the work cycle, which lists all the operations by which a workpiece becomes a finished part; and each operation is defined by an orderly succession of elementary jobs/operations known as steps.

Computer system 4 comprises at least one server computer 5 having a processing unit 6 and a memory 7 (typically a hard disk); and a number of customer computers 8 network connected to server computer 5.

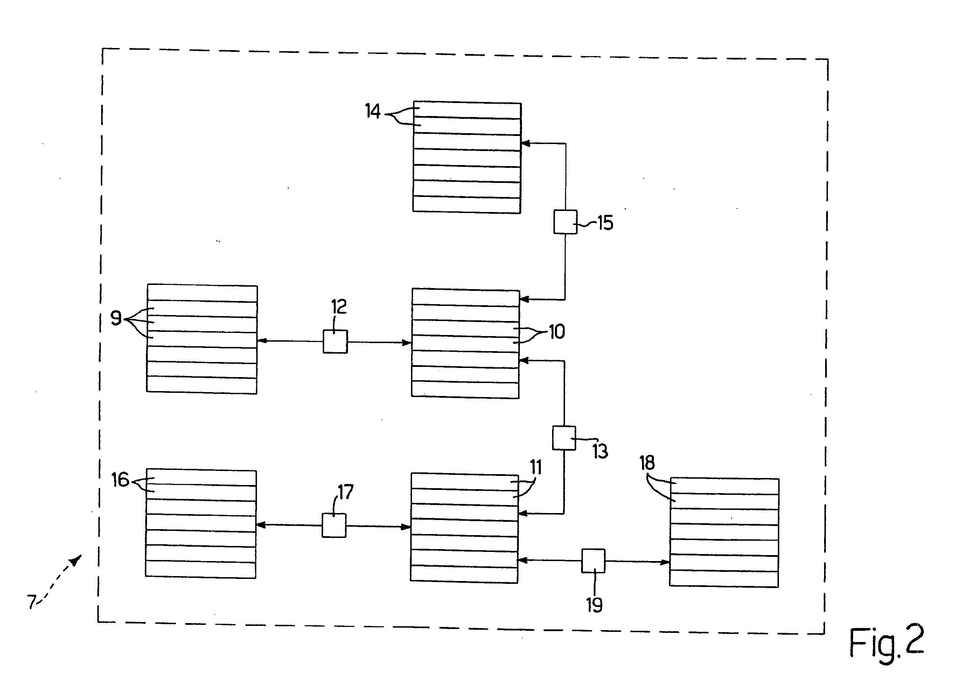

As shown in Figure 2, memory 7 of server computer 5 comprises a number of memory cells 9 organized into a work cycle table, and each containing a description of a given work cycle. To describe a work cycle, each memory cell 9 in the work cycle table comprises an identification code and a text description.

Memory 7 of server computer 5 also comprises a number of memory cells 10 organized into an operations table, and each containing a description of a given operation. To describe an operation, each memory cell 10 in the operations table comprises a progressive identification code number, a text description of the work to be carried out on the part, a description of the machine tool 2 to be used, and, if necessary, the location of machine tool 2 within workshop 1.

Memory 7 of server computer 5 also comprises a number of memory cells 11 organized into a step table, and each containing a description of a given step. To describe a step, each memory cell 11 in the step table comprises a progressive identification code number, a text description of the work to be carried out, and a text field for any comments.

Memory 7 of server computer 5 comprises a number of memory cells 12 containing ties, which associate a number of memory cells 10 in the operations table with each memory cell 9 in the work cycle table, so that each work cycle is assigned a list of operations by which a workpiece becomes a finished part.

Memory 7 of server computer 5 comprises a number of memory cells 13 containing ties, which associate a number of memory cells 11 in the step table with each memory cell 10 in the operations table, so that each operation is assigned a list of steps to be performed to complete the operation.

In a preferred embodiment, memory 7 of server computer 5 comprises a number of memory cells 14 organized into a part table, and each containing a part identification number, a text description of the part, and a part drawing reference (typically the storage address). Memory 7 of server computer 5 also comprises a number of memory cells 15 containing ties, which associate a number of memory cells 14 in the part table with each memory cell 10 in the operations table, so that each operation is assigned a list of parts that can be machined using that particular operation. It should be stressed that memory cells 9 in the work cycle table and memory cells 10 in the operations table contain no information concerning the part for machining, the work cycle and the part for machining being related solely by the ties in memory cells 15. The reason for this is that the same work cycle may be used for machining different parts. For example, if the work cycle of a new part comprises the same operations as an existing work cycle, the new part need simply be assigned the existing work cycle to obtain complete documentation of the work carried out on the new part.

In a preferred embodiment, each memory cell 11 in the step table is also assigned further step-performance information. More specifically, each memory cell 11 in the step table is assigned operating parameters of the tool/instrument 3 to be used (e.g. test frequency, cutting speed, feed rate, .......); reference to at least one drawing of a tool/instrument 3 to be used; and reference to at least one work drawing. Drawings are preferably stored in a drawing data bank, in which each drawing has its own address for easy display. Each memory cell 11 in the step table is therefore also assigned a complete list of the tools/instruments 3 required to perform the step.

For which purpose, memory 7 of server computer 5 comprises a number of memory cells 16 organized into an operating parameter table, and each containing the operating parameters of the tool/instrument 3 to be used. Memory 7 of server computer 5 also comprises a number of memory cells 17 containing ties, which associate a number of memory cells 16 in the operating parameter table with each memory cell 11 in the step table, so that each step is assigned a series of operating parameters.

Memory 7 of server computer 5 comprises a number of memory cells 18 organized into a tool table, and each containing a progressive identification code number, a tool/instrument 3 drawing reference (typically the storage address), and a work drawing reference (typically the storage address). Memory 7 of server computer 5 also comprises a number of memory cells 19 containing ties, which associate a number of memory cells 18 in the tool table with each memory cell 11 in the step table, so that each step is assigned at least one tool.

It should be stressed that the tool/instrument 3 drawing and the work drawing are not combined into one drawing, but are obviously related by a respective step, so that any alteration to a tool/instrument 3 drawing or to a work drawing is automatically reflected in all the steps in which the drawing is referenced. Moreover, if a tool/instrument 3 is used for different operations on a number of parts, one tool/instrument 3 drawing is sufficient and need simply be assigned to a number of steps.

In one possible embodiment, each memory cell 11 in the step table and/or each memory cell 10 in the operations table also comprises an indication of estimated work time and/or estimated work cost.

Processing unit 6 of server computer 5 preferably provides for "copy & paste" operations to speed up creation of new documents from existing ones. That is, a memory cell 9, 10, 11 or 14 can be duplicated together with all the relative ties in memory cells 12, 13 or 15 to subsequently modify the duplicate.

Memory cells 12, 13, 15, 17 and 18 containing the ties may be organized into one or more tie tables, or may be associated with the corresponding memory cells 9, 10, 11, 14, 16 or 18.

Computer system 4 as described above has numerous advantages, by enabling documentation to be created and updated rapidly and efficiently, and to be distributed in real time.

Computer system 4 provides for extensive real-time information, such as which operations a given tool/instrument 3 is used for, or a complete list of the tools/instruments 3 required to work a given part. Knowing what is required to produce a given part, and what a given tool/instrument 3 is used to produce, any proposed alterations to tools/instruments 3 can be assessed beforehand in terms of involvement of other machining operations.

Finally, by means of connection to the drawing data bank, computer system 4 generates and distributes documentation within the plant with no risk of involuntary tampering, by distributing copies as opposed to original drawings.

## Claims

1. A production plant (1) comprising a number of machine tools (2), each for performing a given range of machining operations; a number of tools/instruments (3); and a computer system (4) for memorizing descriptive documentation of possible work cycles; the production plant (1) being **characterized in that** the computer system (4) comprises:
a number of first memory cells (9) organized into a work cycle table, and each containing a description of a given work cycle;
a number of second memory cells (10) organized into an operations table, and each containing a description of a given operation;
a number of third memory cells (11) organized into a step table, and each containing a description of a given step;
a number of fourth memory cells (12) containing first ties, which associate a number of second memory cells (10) in the operations table with each first memory cell (9) in the work cycle table, so that each work cycle is assigned a list of operations by which a workpiece becomes a finished part; and
a number of fifth memory cells (13) containing second ties, which associate a number of third memory cells (11) in the step table with each second memory cell (10) in the operations table, so that each operation is assigned a list of steps by which to complete the operation.

2. A production plant (1) as claimed in Claim 1, wherein, to describe a work cycle, each first memory cell (9) in the work cycle table comprises an identification code and a text description.

3. A production plant (1) as claimed in Claim 1 or 2, wherein, to describe an operation, each second memory cell (10) in the operations table comprises a progressive identification code number, a text description of the work to be carried out on the part, and a description of the machine tool (2) to be used to perform the work.

4. A production plant (1) as claimed in Claim 3, wherein, to describe an operation, each second memory cell (10) in the operations table comprises the location, within the production plant (1), of the machine tool (2) to be used.

5. A production plant (1) as claimed in Claim 3 or 4, wherein each second memory cell (10) in the operations table comprises an indication of estimated work time and/or estimated work cost.

6. A production plant (1) as claimed in one of Claims 1 to 5, wherein, to describe a step, each third memory cell (11) in the step table comprises a progressive identification code number, and a text description of the work to be carried out.

7. A production plant (1) as claimed in Claim 6, wherein, to describe a step, each third memory cell (11) in the step table is associated with operating parameters of the tool/instrument (3) to be used.

8. A production plant (1) as claimed in Claim 7, and comprising:
a number of sixth memory cells (16) organized into an operating parameter table, and each containing operating parameters of the tool/instrument (3) to be used; and
a number of seventh memory cells (17) containing ties, which associate a number of sixth memory cells (16) in the operating parameter table with each third memory cell (11) in the step table, so that each step is assigned a series of operating parameters.

9. A production plant (1) as claimed in Claim 6, 7 or 8, wherein, to describe a step, each third memory cell (11) is associated with at least one drawing of a tool to use, and at least one work drawing.

10. A production plant (1) as claimed in Claim 9, and comprising:
a number of eighth memory cells (18) organized into a tool table, and each containing a progressive identification code number, a reference to a drawing of a tool/instrument (3), and a reference to a work drawing; and
a number of ninth memory cells (19) containing ties, which associate a number of eighth memory cells (18) in the tool table with each third memory cell (11) in the step table, so that each step is assigned at least one tool.

11. A production plant (1) as claimed in one of Claims 6 to 10, wherein each third memory cell (11) in the step table comprises an indication of estimated work time and/or estimated work cost.

12. A production plant (1) as claimed in one of Claims 1 to 11, and comprising:
a number of tenth memory cells (14) organized into a part table, and each containing a description of a part; and
a number of eleventh memory cells (15) containing third ties, which associate a number of tenth memory cells (14) in the part table with each second memory cell (10) in the operations table, so that each operation is assigned a list of parts that can be worked by the operation.

13. A production plant (1) as claimed in one of Claims 1 to 12, and comprising a processing unit (6) for duplicating a memory cell (9; 10; 11; 14) together with all the relative ties.
